# EUROPEAN PATENT SPECIFICATION

(11) **EP 0 327 294 B1**
(45) Date of publication and mention of the grant of the patent: **04.05.1994**
(21) Application number: 89300898.7
(22) Date of filing: 20.01.1989
(51) Int. Cl.: B60R 7/04

(54) **Stowage Tray**
Ablageschale
Tablette de rangement

(30) Priority: 22.01.1988 GB 8801426
(43) Date of publication of application: 09.08.1989
(73) Proprietor: FORD MOTOR COMPANY LIMITED, Brentwood, Essex CM13 3BW (GB); FORD-WERKE AKTIENGESELLSCHAFT, 50725 Köln (DE); FORD FRANCE S. A., 92506 Rueil-Malmaison Cédex (FR); FORD MOTOR COMPANY, Dearborn, MI 48120 (US)
(72) Inventor: Amner, John Arthur, Rochford Essex SS4 1SR (GB)
(74) Representative: Messulam, Alec Moses

(56) References cited:
- CH-A- 408 678
- CH-A- 528 393
- DE-U- 8 428 747
- FR-A- 2 613 299

## Description

This invention relates to a motor vehicle under-seat stowage tray.

An under-seat stowage tray is known from document CH-A-528 393. In this document, a pair of guide rails is mounted beneath a seat, and a drawer slides on these rails for backward and forward movement. A similar tray is known from the Mazda 323 vehicle sold in the United Kingdom (Mazda is a Registered Trade Mark). Generally the storage capacity of such trays is limited and the accessibility of objects stored in the tray is poor.

It is an object of the present invention to provide a tray with a large storage volume and which is easy to load and unload.

According to the present invention, there is provided a motor vehicle under-seat stowage tray arrangement, the arrangement comprising a tray and a pair of rails, the rails being adapted to be secured below a vehicle seat and to receive opposite sides of the tray so that the tray is guided by the rails for backwards and forwards sliding movement, characterised in that the tray and the rails are so formed that once the tray has been slid forward from under the seat, the front end of the tray can be tipped downwards to facilitate loading and unloading of the tray.

The rails are preferably made of plastics material so that they can be heat staked to the under-side of a seat which has a plastics base. The tray itself is also preferably of plastics, and the contacting surfaces of the tray and of the rails carry formations to prevent the tray rattling in the rails.

A spring-loaded engagement may be manually operated to allow the tray to be completely removed from the rails when desired.

The invention will now be further described, by way of example, with reference to the accompanying drawings, in which:
Figure 1 is a side view of a tray in position beneath the seat, with a part of the rail broken away and another part in section to illustrate details of the construction;
Figure 2 is a detail of the front part of a tray;
Figure 3 is a plan view of part of a tray and a corresponding rail from above, before the rail has been attached to a seat;
Figure 4 is a plan view of one side of a tray showing the part which will engage in a rail;
Figure 5 is a cross section on the lines V-V from Figure 1;
Figure 6 is a side view of a rail; and
Figure 7 is an end view of the rail taken in the direction of arrow A from Figure 6.

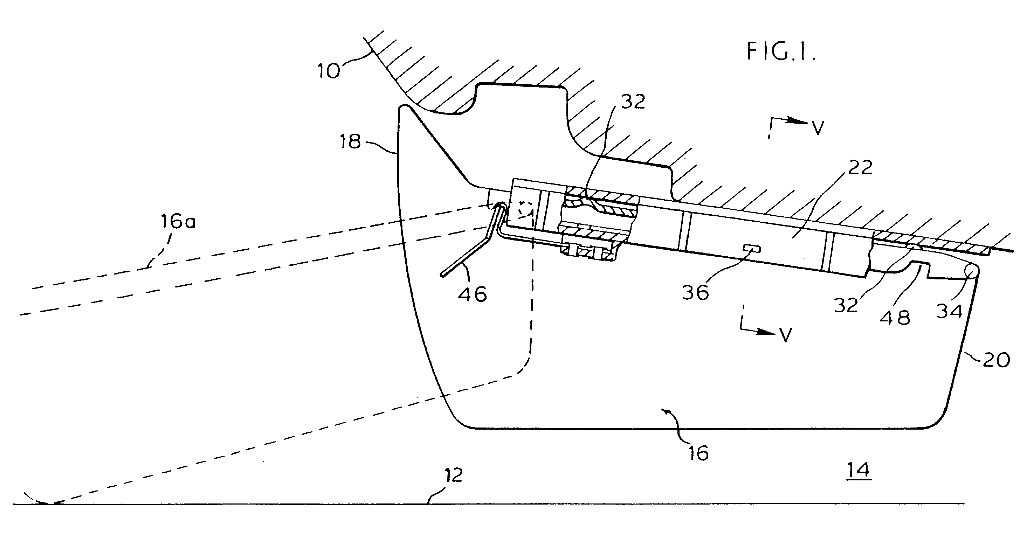

Figure 1 shows the under-side of a seat 10 in a car, where the floor of the car is indicated at 12. Between the under-side of the seat and floor is a space 14, and a stowage tray 16 is mounted in this space. The tray 16 has a front 18 and a rear 20 and is supported on rails 22, the rails being secured to the under-side of the seat 10.

The rails allow the tray 16 to be opened and shut, and in the extreme forward position of the tray, it can be tipped to take up the position shown in dotted lines at 16a.

The fact that the tray slides right forwards and then tips as shown provides good accessibility to the contents of the tray and in particular since the floor of the tray then slopes downwards, the contents of the tray will tend to roll forwards and become accessible.

Where the under-side of the seat 10 is formed by a plastics tray, and the rails 22 are also of plastics material, then the rails 22 can be secured to the seat by a welding or heat staking process.

The tray 16 has a grip 24 formed in its front face by cutting out an aperture in the front face and providing a closure wall 26 behind the aperture. This can be done as part of the moulding of the tray.

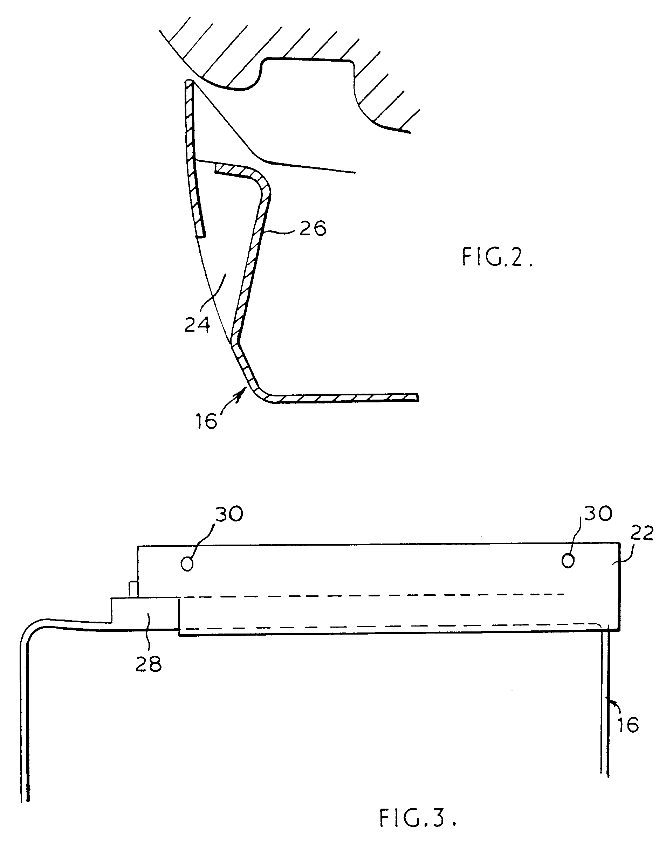

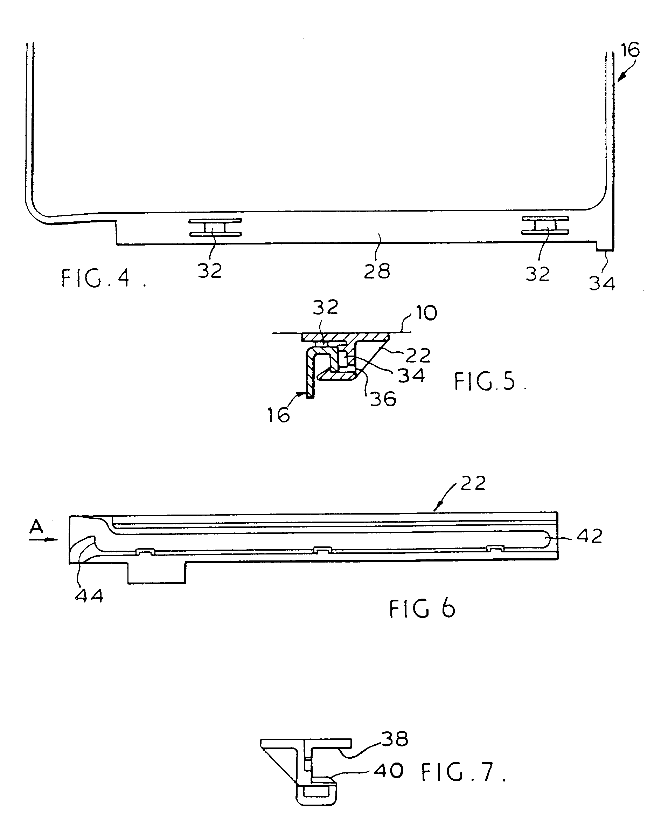

The lateral edges of the tray have laterally extending flanges 28 as can bee seen in Figure 3, to engage with the rails 22. A flange on the rails has fixing holes 30 for fixing the rail to the seat. Figure 4 shows that the flanges 28 have raised pimples 32 (which can also be seen in Figure 1) in order to get rid of any play between the tray flange 28 and the rails. At the rear end, the flange 28 includes a laterally projecting lug 34.

Also on the rails 22, there is a cut-out 36 which allows dust and other debris to escape from the track.

The rails 22, as can be seen in Figures 6 and 7, have upper 38 and lower 40 surfaces which define the slide surface for the tray. Also in the vertical wall of the tracks there is a groove 42 for the lug 34. At the front of the rail, this groove 42 follows a dog-leg path, so that when the tray is normally pulled out its movement will be stopped by abutment of the lug 34 with an upright wall 44. However if the rear end of the tray is lifted, against the force of a spring 46, then the tray can be removed from the rails.

The spring 46 is secured to the front edge of one or both rails as shown in Figure 1. This provides a positive lock to hold the tray in its closed position, but a downwardly depending outer part of the flange 28 has a cam-shaped notch which will allow the door to be pulled forward against the force of the spring 46 which is then cammed downwards. At the end of the opening movement of the drawer, the top part of the spring 46 engages in a second recess 48, to prevent withdrawal of the tray in normal operation. However if the spring 46 is depressed manually, and the spring has a long forward projecting tongue to enable this to be done, then the tray can be removed.

## Claims

1. A motor vehicle under-seat stowage tray arrangement comprising a tray (16) and a pair of rails (22), the rails (22) being adapted to be secured below a vehicle seat (10) and to receive opposite sides of the tray (16) so that the tray (16) is guided by the rails (22) for backwards and forwards sliding movement, characterised in that the tray (16) and the rails (22) are so formed that once the tray (16) has been slid forward from under the seat (10), the front end of the tray can (16) be tipped downwards (16a) to facilitate loading and unloading of the tray (16).

2. An arrangement as claimed in Claim 1, wherein the rails (22) are made of plastics material.

3. An arrangement as claimed in Claim 1 or Claim 2, wherein the tray (22) itself is also of plastics material, and the contacting surfaces of the tray (16) and of the rails (22) carry formations (32) to prevent the tray (16) from rattling in the rails (22).

4. An arrangement as claimed in any preceding claim, wherein a spring-loaded engagement (46) is manually operable to allow the tray (16) to be completely removed from the rails (22), when desired.

## Patentansprüche

1. In einem Kraftfahrzeug zu installierende Vorrichtung eines Ablagekastens einschließlich einer Ablage (16) und einem Schienenpaar (22), welche Schienen (22) so angepaßt sind, daß sie unter einem Fahrzeugsitz (10) angebracht werden können und daß sie die gegenüberliegenden Seiten der Ablage (16) aufnehmen, so daß die Ablage (16) von den Schienen (22) zu einer Rückwärts- und Vorwärtsbewegung geführt wird, dadurch gekennzeichnet, daß die Ablage (16) und die Schienen (22) so geformt sind, daß, sobald die Ablage (16) nach vorne unter dem Sitz vorgeglitten ist, das vordere Ende der Ablage (16) nach unten gekippt wird (16a), um das Be- und Entladen der Ablage (16) zu erleichtern.

2. Vorrichtung gemäß Anspruch 1, wobei die Schienen (22) aus einem Plastikmaterial hergestellt sind.

3. Vorrichtung gemäß Anspruch 1 oder Anspruch 2, wobei besagte Ablage (16) selbst auch aus einem Plastikmaterial besteht, und die sich berührenden Oberflächen der Ablage (16) und der Schienen (22) mit Strukturen (32) versehen sind, die verhindern, daß die Ablage (16) auf den Schienen (22) rüttelt.

4. Vorrichtung gemäß einem der vorstehenden Ansprüche, worin ein mit Federdruck versehener Eingriff (46) manuell betätigt werden kann, um zu ermöglichen, daß die Ablage (16) ganz von den Schienen (22) entfernt werden kann, wenn dies gewünscht wird.

## Revendications

1. Dispositif de plateau de rangement placé sous un siège de véhicule à moteur comprenant un plateau (16) et une paire de rails (22), les rails (22) étant destinés à être fixés sous le siège du véhicule (10) et à recevoir les côtés opposés du plateau (16), de sorte que le plateau (16) est guidé par les rails (22) pour un mouvement de glissement vers l'avant et vers l'arrière, caractérisé en ce que le plateau (16) et les rails (22) sont formés de telle sorte qu'une fois que le plateau (16) a été tiré vers l'avant du dessous du siège (10), l'extrémité antérieure du plateau (16) peut être basculée (16a) de manière à faciliter le chargement et le déchargement du plateau (16).

2. Dispositif selon la revendication 1, dans lequel les rails (22) sont faits en matière plastique.

3. Dispositif selon la revendication 1 ou 2, dans lequel le plateau (16) lui-même est également en matière plastique et les surfaces de contact du plateau (16) et des rails (22) portent des configurations (32) destinées à empêcher le plateau (16) de trembler dans les rails (22).

4. Dispositif selon l'une des revendications précédentes, dans lequel un engrènement (46) chargé par ressort peut être actionné manuellement afin de permettre au plateau (16) d'être entièrement retiré des rails (22), si nécessaire.
